# EUROPEAN PATENT SPECIFICATION

(11) **EP 0 270 118 B1**
(45) Date of publication and mention of the grant of the patent: **10.03.1993**
(21) Application number: 87117909.9
(22) Date of filing: 03.12.1987
(51) Int. Cl.: G11B 7/095, G11B 7/09, G11B 7/085

(54) **Apparatus for recording and reading an optical disc, having reduced offset in its tracking error signal**
Gerät zum Aufzeichnen und Wiedergeben einer optischen Platte mit herabgesetzter Nullpunktsabweichung in ihrem Spurverfolgungsfehlersignal
Appareil pour enregistrer et reproduire sur un disque optique avec écart permanent réduit dans son signal d'erreur de suivi de piste

(30) Priority: 03.12.1986 JP 289549/86
(43) Date of publication of application: 08.06.1988
(73) Proprietor: FUJITSU LIMITED, Kawasaki-shi, Kanagawa 211 (JP)
(72) Inventor: Arai, Shigeru, Zushi-shi Kanagawa, 249 (JP)
(74) Representative: Schmidt-Evers, Jürgen, Dipl.-Ing.

(56) References cited:
- EP-A- 0 099 576
- EP-A- 0 215 556
- DE-A- 3 618 720
- DE-A- 3 620 301
- Optical Mass Data Storage II,Robert P Freese et al.,Editor,Proc.SPIE vol. 695, August 1986, Bellingham,US pages 224 - 229; Y.Tsunoda, et al.: "On-land Composite Pregroove Method for High Track Density Recordings"
- PATENT ABSTRACTS OF JAPAN vol. 8, no. 141 (P-283)(1578) 30 June 1984, & JP-A-59 038939
- PATENT ABSTRACTS OF JAPAN vol. 10, no. 154 (P-463)(2210) 04 June 1986, & JP-A-61 008745
- PATENT ABSTRACTS OF JAPAN vol. 10, no. 160 (P-465)(2216) 07 June 1986, & JP-A-61 013447
- PATENT ABSTRACTS OF JAPAN vol. 8, no. 208 (P-302)(1645) 21 September 1984, & JP-A-59 092443
- PATENT ABSTRACTS OF JAPAN vol. 10, no. 124 (P-454)(2181) 09 May 1986, & JP-A-60 251527

## Description

This invention relates to an apparatus for reading and/or recording a digital information on an optical disc, and more particularly to an improvement for reducing residual offset caused by a skewed disc, etc. in tracking error signal detected by a pair of light detector in symmetry with respect to the centre of a spiral or coaxial track of the optical disc.

### Description of the Related Art

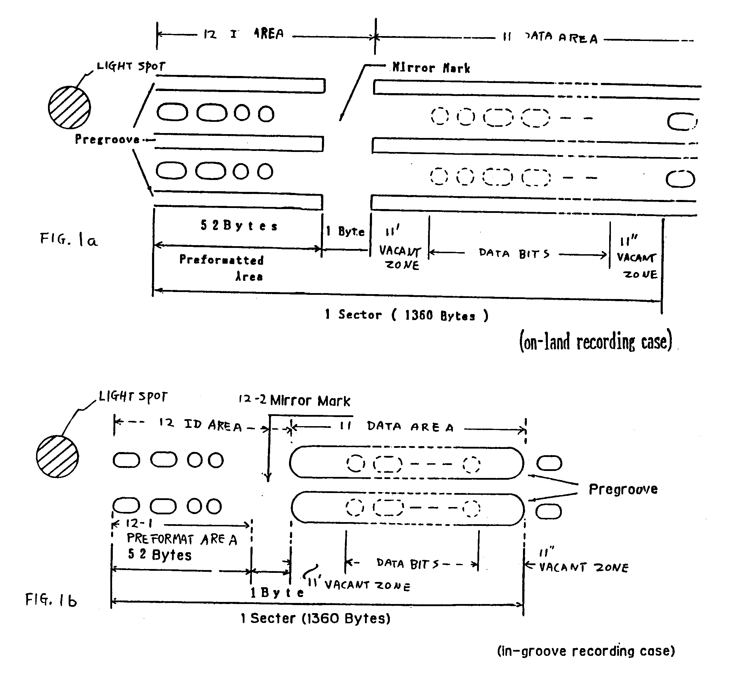

An optical disc on which a coaxial or spiral track(s) is arranged to record bits of digital information therein has been intensively developed as an external memory media of digital computers. There are many types of format of the tracks, but a single track (one circulation of the track) includes typically seventeen sectors. Typical sector formats which are now under discussion for a standard of the industry at Ad hoc committee are shown in FIGs. 1. In the format of FIG. 1a, a groove, called a pregroove, is provided between adjacent tracks, and the bits for recording data are between the pregrooves, thus this is called "on-land recording". In the format of FIG. 1b, a pregroove is provided on a portion where the bits are to be written-in, thus this is called "in-groove recording". In either format, a sector typically containing 1360 bytes consists of a data area 11 having 1307 bytes and an ID (identification of the sector) area 12 having 53 bytes. The ID area 12 consists of a preformat area 12-1 and a mirror mark 12-2 which has no bit, no groove, but spends one byte space. Bits of the preformat area are installed in pits formed together with the grooves on the disc when the disc is manufactured. As for the mirror mark, the explanation shall be made later on. There is no bit in the data area 11 until the data bits are written therein for recording, therefore the bits are shown by dotted circles in FIGs. 1. Before beginning as well as after ending a sequence of the data bits in the data area 11, there are generally provided a vacant zone 11ʹ and 11ʺ respectively, having no bit thereon and is as long as 20 microseconds (referred to hereinafter as µs).

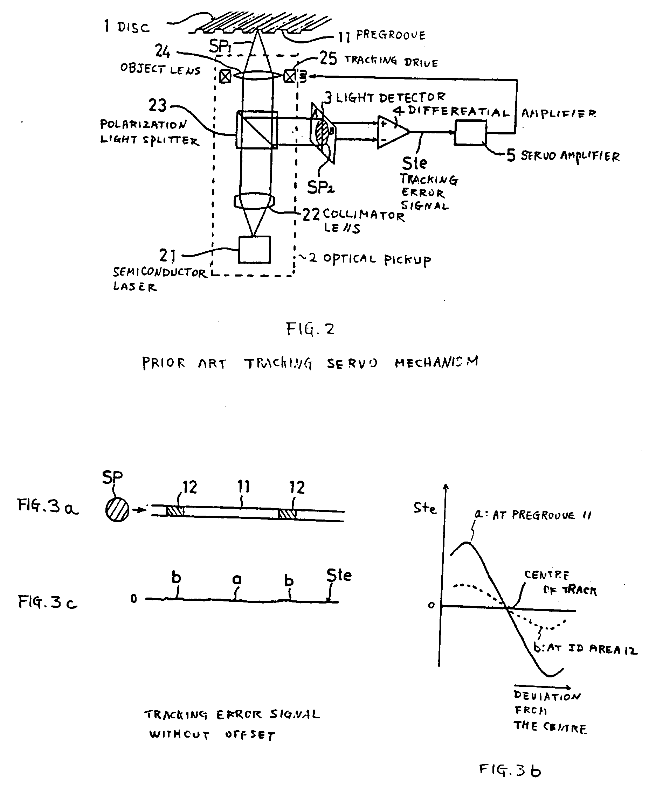

Radial pitch of the tracks is so small, typically 1.6 micron metre (referred to hereinafter as µm) and the the rotation of the disk may be eccentric as much as several tens to a hundred micron metres, that, in order for the light spot SP1 to always capture, i.e. to trace, the centre of the track, a servo mechanism is provided. A typical configuration of a prior art optical pick up and its servo mechanism is schematically shown in FIG. 2. A light produced by a semiconductor laser 21 is focused by a collimator lens 22 and an object lens 24 so as to locate a light spot SP1 on to the centre of the track. Reflected light from the spot SP1 is further reflected by a polarization light splitter 23 to focus a spot SP2 on to a light detector 3, which consists of two symmetrical photo detector elements, A and B. Location of the light detector 3 is set so that the centre line of the track is focused to coincide with the border line of the two elements, A and B. Difference of output levels of the two elements, A and B, is detected by a differential amplifier 4, whose output Ste indicates amount and direction of the tracking error, which is a deviation of the light spot SP1 from the centre of the track.

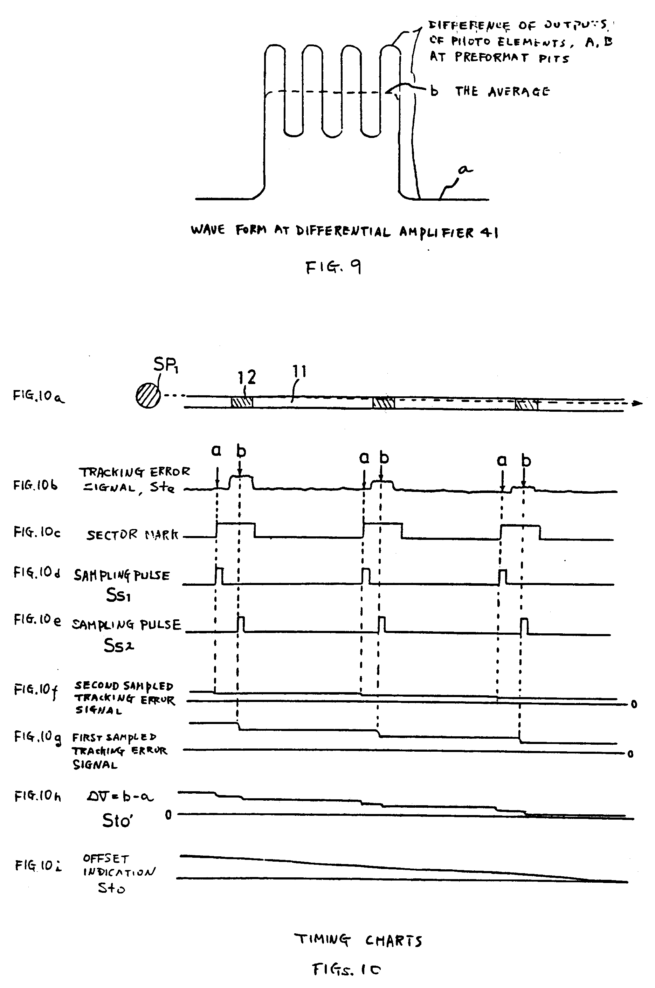

Characteristics of the tracking error signals are hereinafter explained, referring to the in-groove recording of FIG. 1b. In FIG. 3b having no offset, the amount of the tracking error signal is shown for variable deviation of the light spot SP1 from the centre of the track. The solid line indicates the tracking error signal Ste at the pregroove area 11 having no data-bits therein now, as well as the dotted line indicates the tracking error signal at the preformat area 12-1 having preformat pits thereon. Because of no offset in this case, the zero points of the two tracking error signals coincide with each other and with the centre of the track. This tracking error signal Ste is negatively fed back through a servo amplifier 5 to a tracking drive 25 of the tracking servo mechanism to adjust location of the object lens 24 or the entire optical pick up 2, etc., so that the tracking error signal approaches zero. This is the widely used push-pull method. However, even when the spot captures the centre of the track, if the disc is skewed, or the axis of the lens is not aligned to the centre border line of the light detector 3, or other adjustments are poor, there still may arise a tracking error signal, which is like a bias component in the signal and is called an offset. The offset is explained in FIG. 4b, in which "D" indicates the offset in radial distance on the track, and Sos indicates the the offset in the tracking error signal Ste. Thus, the offset is represented by the amount Sos of the tracking error signal Ste when the spot is correctly located at the centre of the track, or in other expression, by the deviation "D" of the light spot SP1 from the centre of the track when the spot is servo controlled so as to keep the tracking error signal essentially zero. Anyhow, the zero point of the tracking error signal including an offset component does not coincide with the centre of the track. Therefore, a tracking servo system controlled by only the above-mentioned tracking error signal can not capture the centre of the track.

Prior art techniques to compensate this offset and the problems shall be hereinafter described. One of the prior art technique is disclosed to by T. Kaku et al. in the U.S. patent No. 4,663,751 and the unexamined Japanese patent No. Sho 61-280036. In these publications, the reflected light from the mirror mark 12-2 having no pit produces a tracking error signal which indicates to the degree of the offset, because the light spot at the pregroove area 11 is servo controlled so that the tracking error signal approaches zero. Thus the tracking error signal at the mirror mark is utilized for compensating the offset. However, the circuits referred therein must sample as short as 1.5 µs mirror mark and handle very high frequency of more than 5 MHz produced by the preformat pits 12-1. Accordingly, the circuits, such as differential amplifier, adder circuit and sample-hold circuit, cause considerable increase of production cost as well as their occupying space. Further more, this method can not be applied to a disc format having no mirror mark. Another prior art technique is disclosed by K. Tatsumi et al. in the unexamined Japanese patent No. Sho 61-8745 and Sho 61-13447. In these latter two publications, the reflected light from a flat portion between each preformat pit is sampled and utilized as a signal which indicates a degree of the offset. Circuits for sampling the portions between 5 MHz pits require higher frequency characteristics than that of the above-mentioned Kaku's circuit, accordingly the circuits must be very sophisticated, expensive and bulky. Still another prior art technique is disclosed by Y. Tsunoda, et al in "On-land Composite Pregroove Method for High Track Density Recordings" at a session "Optical Mass Data Storage II" of Proceedings of SPIE- The International Society for Optical Engineering held on 18-22 Aug. 1986 at San Diego, California. In this report, Tsunoda proposed to utilize wobbled pits mark in the place of the above-mentioned mirror mark. Circuits used in Tsunoda's proposal also requires high frequency characteristics of several MHz, thus the circuits must be very sophisticated, expensive and bulky, as well.

### SUMMARY OF THE INVENTION

It is a general object of the invention, therefore to provide a servo controlling circuit which help compensate an offset in a tracking error signal simply and inexpensively.

A circuit of the present invention has a first detection circuit which detects a difference of the two outputs of the photo detector elements and outputs the detected difference sampled and averaged by a predetermined period for each sector. The predetermined period is chosen from a period during which the spot scans the preformat pits 12-1. The output signal is named as a first sampled tracking error signal. Signal level of a first sampled tracking error signal is lower than a second sampled tracking error signal which is the tracking error signal sampled at the data area having no bits therein, because signal level of the reflected light is lowered by the existing bits. If there is no offset, the first and second sampled tracking error signals are both close to zero, because the spot is servo controlled so that the second sampled tracking error signal approaches zero. When there is an offset, though the spot is servo controlled to keep the second sampled tracking error signal essentially zero, the first sampled tracking error signal still remains, thus the difference of the first and second sampled tracking error signals indicates the amount of the offset.

This offset signal may be utilized as a monitor to adjust alignment of the apparatus, such as optical system or the light detector, etc., and also may be fed back compounded in the tracking error signal, thus the offset component is automatically compensated.

The first detection circuit does not have to output high frequency component produced by the preformat pits, but only output its average level. Therefore, the circuit can be simple and inexpensive. This invention is compatibly applicable to a disc format with or without mirror mark.

The above-mentioned features and advantages of the present invention, together with other objects and advantages, which will become apparent, will be more fully described hereinafter, reference being had to the accompanying drawings forming a part hereof, wherein like numerals refer to like parts throughout.

### BRIEF DESCRIPTION OF THE DRAWINGS

FIGs. 1 schematically show typical formats of a sector of an optical recording disc.
FIG. 2 shows a prior art tracking servo mechanism for an optical disc apparatus.
FIGs. 3 explain tracking error signal when the light spot is at the centre of the track without an offset.
FIGs. 4 explain tracking error signal when an offset is existing.
FIGs. 5 explain tracking error signal when an offset is existing on another side of the track.
FIG. 6 show a principle block diagram of the present invention.
FIG. 7 shows a principal block diagram of the present invention when the offset signal is compounded in the feed back signal of the servo control.
FIG. 8 schematically illustrates a circuit configuration of an embodiment of the present invention.
FIG. 9 explains a wave form produced when the tracking error signal is detected.
FIGs. 10 show timing charts of the circuit embodying the present invention.
FIG. 11 schematically illustrates a circuit to be added to the circuit of FIG. 8 in order to automatically compensate the offset.

### DESCRIPTION OF THE PREFERRED EMBODIMENTS

A block diagram of the principle of the present invention is shown in FIG. 6. The light detector 3 has photo detector elements, A and B, and the centre line of the track in the reflected light spot should be adjusted to fall onto the border line of these two elements A and B. The numeral 6 denotes the first detection means which detects difference of the outputs of the two photo elements and outputs the detected difference sampled and averaged by a period while the spot scans the preformat pits. This output signal is the first sampled sampled tracking error signal. The numeral 7 denotes the second detection means which detects difference of the light detector's output signals sampled by a period while the spot scans an area in the data area but before or after the end of a sequence the data bits of the previous sectors. This output signal is the second sampled tracking error signal. The numeral 8 denotes the third detection means which detects the difference of the first and second tracking error signals.

Practical circuit, embodying the principle block diagram FIG. 6 of the present invention, for monitoring the amount of the offset is shown in FIG. 8, as well as the timing charts in FIG. 10. A differential amplifier 41, a low pass filter 43 and a first sample-hold circuit 61 compose the first detection means 6. Again, a differential amplifier 41, the low pass filter 43 and a second sample-hold circuit 71 compose the second detection means 7. Each output signal from photo element, A and B, of the light detector 3 is inputted to each input terminal of the differential amplifier 41, whose output is a difference of the input signals. When the spot scans over an area having bits, such as the the preformat pits, the signal in the reflected light includes approximately 5 MHz component produced by the pits as shown by a solid line in FIG. 9. However the present invention utilizes its average, which is shown by a dotted line in the figure, as well as slowly changing signal at the pregroove area, which does not contain a high frequency component. Therefore, a low pass filter 43 having a cut off frequency of 100 kHz, for example, is provided to the output terminal of the differential amplifier 41, and outputs a tracking error signal Ste as shown in FIG. 10b. The tracking error signal Ste is negatively fed back to a tracking drive 25 through a phase compensation circuit 42 and a servo amplifier 5 by a well known servo technique. Each of the sample hold circuits 61 and 71 samples the tracking error signal Ste from the differential amplifier 41 through the low pass filter 43 only during the period respectively specified by the timing generator circuit 103, and each outputs the inputted signal level constantly held until a next sampling is instructed. An output from the first sample-hold circuit 61 named as a first sampled tracking error signal (FIG. 10f), and an output from the second sample-hold circuit 71 named as a second sampled tracking error signal (FIG. 10g), are inputted to a differential amplifier 81, whose output is delivered to a display device 83 through a low pass filter 82. The differential amplifier 81 and the low pass filter 82 composes the third detection means 8.

Operation of the circuit shall be hereinafter described. As explained earlier, when the light spot SP1 runs without any offset as shown in FIG. 3a directed by an arrow mark along the centre of the track, where the pregroove 11 has no data-bit therein yet, or no data written in yet, the tracking error signal outputted from the pregroove area 11 is shown by a solid line "a" and the tracking error signal outputted from the preformat area 12-1 is shown by a dotted line "b" in FIG. 3b, where the abscissa shows deviation of the spot from the centre of the track. Level of the tracking error signal Ste from an area having bits is smaller than that of the tracking error signal from the pregroove area, because the reflected light is reduced by the AC component produced by the existance of the bits. If there are data bits already written in the pregroove 11, level of the tracking error signal therefrom also becomes smaller like that from the preformat pits, depending on the written bits therein. However, the spot can be still servo controlled by the either signal from the pregroove with or without the data bits, through the phase compensation circuit 42, the servo amplifier 5, and the tracking drive 25 so as to keep the centre of the track along the pregroove 11, therefore as seen in FIG. 3c, the levels of these tracking error signals, "a" from the pregroove area and "b" from the preformat area, are almost zero through a sector. The phase compensation circuit 42, as widely used, has a peak of its frequency characteristics at, for example 3 kHz, for accomplish a stable feed back loop by preventing a self oscillation of the loop.

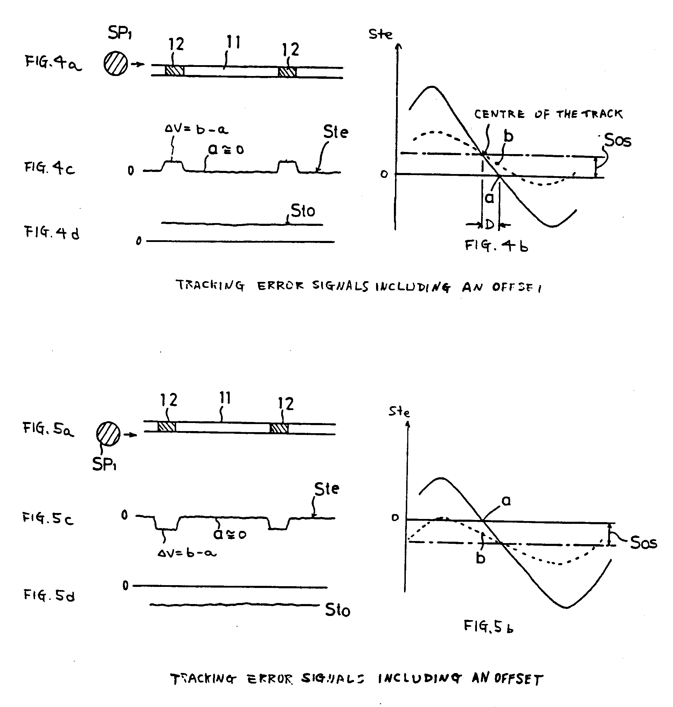

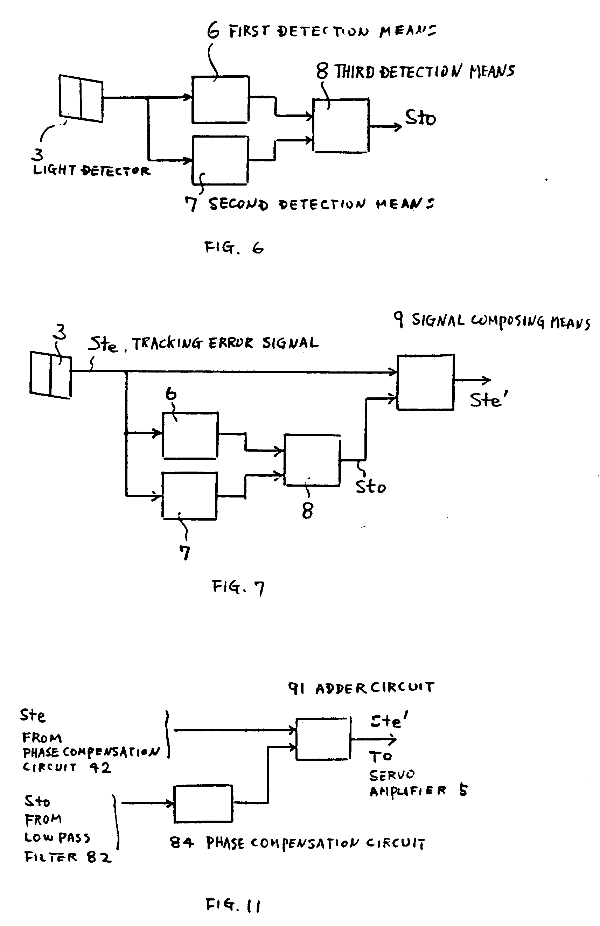

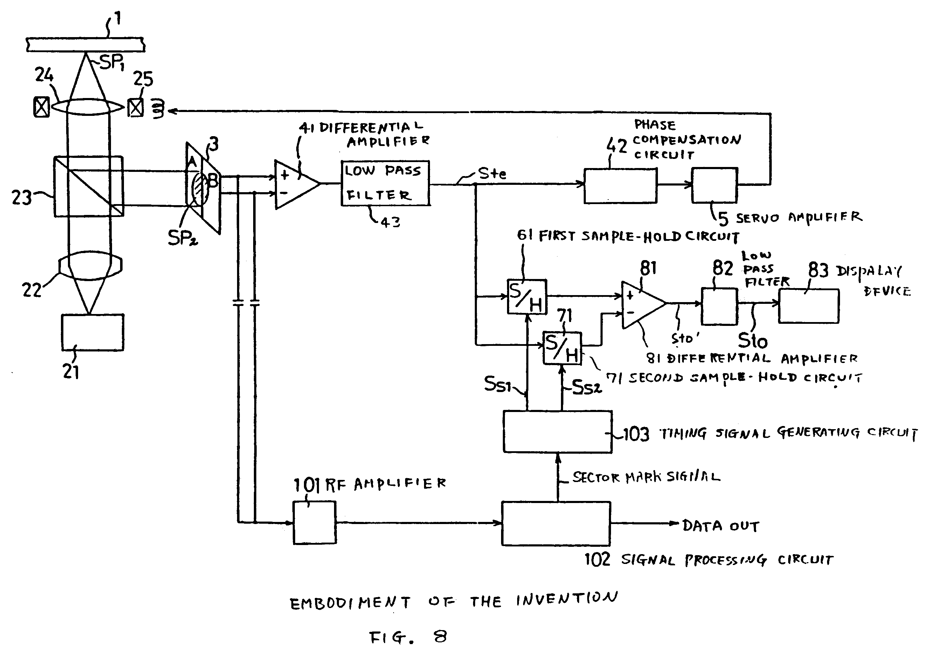

When the apparatus has an offset by some reason, the light spot is deviated, for example, to upper side from the centre of the track as shown by SP1 in FIG. 4a. The spot SP1 is servo controlled by the tracking error signal "a" while the spot runs along the pregroove 11, thus the level of the tracking error signal "a" is kept almost zero as seen in FIG. 4b and FIG. 4c by the same servo mechanism as of FIGs 3. When the spot comes to scan over the preformat pits 12-1, the tracking error signal Ste becomes "b" departing from zero as shown in FIG. 4b and FIG. 10b. This is because the spot which is electro-mechanically driven can not follow the sudden and short change of the tracking error signal Ste, where "b" is about 50 to 60 us. In other words, the spot runs on an extension line from the spot motion along the pregroove 11 by the inertia of the electro mechanical optical device, even though the preformat pits 12-1 produce their own tracking error signal "b", which should servo-drive the spot. The amplitude of "b" is smaller than that of "a", however is proportional to the level of the tracking error signal which should appear if having no pits thereon. Therefore, the difference _{Δ}V of the tracking error signal "b" at the preformat pits 12-1 and the tracking error signal "a" at the pregroove area 11 having almost zero level owing to the servo mechanism can indicate the amount of the offset as shown in FIG. 4c. The present invention is characterized to utilize this difference _{Δ}V derived from the average tracking error signal from the preformat pits as an indication of the amount of the offset. In order to calculate this difference, a first sampled tracking error signal is obtained by sampling the tracking error signal Ste (of FIG. 10b) with the sample-hold circuit 61 during a period within a while the spot is scanning over the preformat pits 12-1. This period is specified Sampling for obtaining a second sampled tracking error signal is carried out as well by the sample-hold circuit 71 during a period at a vacant, i.e. no data-pit, zone 11ʺ provided after the end of the sequence of data bits in the previous sector's pregroove. This is because this zone is always vacant regardless to the existance of data bits. After the differential amplifier 81 calculates and outputs the difference Stoʹ=_{Δ}V of the first and second sampled tracking error signals, its output signal level is held constant, but renewed by each sector, as shown in FIG. 4d and 10h. The offset generally changes slowly, for example by a cycle of the rotation of the disc, and on the other hand, a single circle of the track has typically 17 sectors. Therefore, the change of the offset through a single sector having only 360°/17 ≅ 21° is practically small enough to be considered as negligible. This is also the reason why the tracking error signal sampled at the previous sector can be used for servo controlling the spot through the current sector. The low pass filter 82 is provided to the output terminal of the differential amplifier 81 for removing spikes and smoothing its transitions produced in the offset signal Stoʹ for each sector, typically having a cut off frequency of 30 Hz. An output signal, namely an offset signal, Sto (FIG. 10i) from the low pass filter 82 may be displayed by a display device 83. Thus optical system as well as the tracking system of the apparatus can be adjusted by monitoring the display 83.

The output signals from the elements, A and B of the light detector 3 are summed by an RF amplifier 101 in order to obtain pulse signals corresponding to the pits. The output of the RF amplifier 101 is delivered to a signal processing circuit 102. The signal processing circuit 102 recognizes timing and other information from the pulses of the pits of each sector, and delivers a sector mark information (FIG. 10c) to the timing generator circuit 103, as well as transmits the readed-out data to outside. According to the sector mark information, the timing generator circuit 103 produces and delivers sampling pulses Ssl (FIG. 10d) and Ss2 (FIG. 10e) to the sample-hold circuits 61 and 71 respectively, as described earlier. Pulse width of the sampling pulses is typically 5 to 6 us, however this amount can be arbitrarily chosen as long as the sampling is well accomplished, because the width of the vacant zone 11ʹ or 11ʺ and the ID pits of the preformat area 12-1 are 20 and 50 to 60 us, respectively.

The offset signal Sto obtained from the differential amplifier 81 through the low pass filter 82 may be compounded with the tracking error signal Ste and delivered to the servo mechanism in order to automatically compensate the offset so that the spot captures the centre of the track, as shown in principle block diagram in FIG. 7, where the numeral 9 denotes a signal composing means. Practical circuit of the signal composing means 9 is shown in FIG. 11, where the numeral 84 denotes a phase compensation circuit having a frequency peak at much lower frequency, for example 3 kHz, than that of the phase compensation circuit 42, thus allows a stable operation of the tracking servo mechanism. The numeral 91 is an adder circuit, which composes the signal composing means 9, receiving the phase compensated tracking error signal from the phase compensation circuit 42 and the offset signal Sto from the differential amplifier 81 through the low pass filter 82. The adder circuit 91 compounds these inputted two signals and outputs a compounded tracking error signal Steʹ, which is delivered to the servo amplifier 5. In other words, the circuit shown in FIG. 11 is added to the circuit of FIG. 8. Then, not only the offset having a DC component produced by, for example, a skewed disc, but also other slowly changing offset having an AC component, for example approximately 30 Hz, can be well compensated.

When the offset is on lower side of the track, the operation is shown in FIGs. 5, where the signal "b" is of opposite direction of that of FIGs. 4, however explanation can be made in a same way.

Though in the above-described explanation the sampling for the second sampled tracking error signal is made after the end of a sequence of data bits of the previous sector, it is also possible that the sampling is made before the beginning of the sequence of the data bits of the current sector.

As described earlier, the tracking error signal Ste of the present invention does not have to include a high frequency component, such as 5 MHz, produced by the bits, therefore, the differential amplifier 41 may be composed of a very available, common, inexpensive operational amplifier, having frequency characteristics up to only 20 kHz, for example. In this case where the differential amplifier itself does not output the high frequency component but outputs only its average of them, the low pass filter 43 may be omitted.

Though the above-described explanation is made referring to the in-groove recording, it is apparent that the present invention is applicable to the on-land recording shown in FIG. 1a, as well.

Though the above-described explanation is made referring only to a pair of photo detector element A and B, it is apparent that the present invention is applicable to a light detector 3 having a plurality of pairs of the photo elements, such as four elements.

As above-mentioned, according to the present invention, tolerance on assembling the apparatus as well as tolerance for the enviromental conditions can be relaxed, and the servo gain of the tracking servo mechanism can be increased because of the improved residual tracking errors, without requiring a sophisticated, bulky and expensive circuit. And, this system can be applied to a optical disc having no mirror mark. Smaller ID area by omitting the mirror mark means larger data area available, resulting in higher capacity of the disc.

## Claims

1. An apparatus for optically writing as well as reading a digital information in a grooved track coaxially or spirally arranged on an optical recording disk (1), each track being divided into a plurality of sectors, each of which having an ID area (12) and a data area (11), wherein a light spot (SP) is focused on the track and a reflected light therefrom is detected by a pair of light detectors (3), from whose outputs a data signal as well as a tracking error signal (Ste) are detected, and the tracking error signal (Ste) is fed on a servo control system in order to control a location of the light spot (SP) so as to capture center of the track, comprising
first detection means (6) for detecting difference of output signals from the light detector (3) and outputting said detected difference sampled by a first predetermined period, output signal of said first detection means (6) being a first sampled tracking error signal, holding a constant output level for each sector;
second detection means (7) for outputting the tracking error signal sampled by a second predetermined period, output signal of said second detection means (7) being a second sampled tracking error signal, holding a constant output level for each sector; and
third detection means (8) for detecting and outputting a difference of said first and second sampled tracking error signals,
further comprising that
said first detection means (6) average said detected difference;
said first predetermined period is the period during which the light spot (SP) is scanning pits of the ID area (12) and
said second predetermined period is the period during which the light spot (SP) is scanning a vacant zone in said data area and
said output (Sto) of said third detection means (8) indicates an amount of an offest, which is still an existing deviation of the light spot (SP) from center of the track so that the light spot (SP) is servo controlled by the tracking error signal so as to keep the tracking error signs essentially to zero.

2. An apparatus according to claim 1 , further characterized by
signal composing means (9) for compounding said offset signal (Sto) outputted from said third detection means (8) with the tracking error signal (Ste), said compounded signal (Ste') being fed back to servo-control the light spot (SP), whereby an offset component in the tracking error signal is reduced.

3. An apparatus according to claim 1 or 2, characterized in that said first detection means (6) includes amplifier means for low frequency band so as to output an average level of difference of outputs of the pair of the light detector (3).

4. An apparatus according to any one of claims 1 to 3, characterized in that said first detection means (6) is composed of:
differential amplifier means (41) for detecting difference of outputs of the pair of the light detector (3) and outputting an average of said detected difference, and first sample-hold means (61) for holding and outputting an output level of said differential amplifier means (41) of a first predetermined period for each sector.

5. An apparatus according to any one of claims 1 to 4, characterized in that said second detection means (7) is composed of:
differential amplifier means (41) for detecting difference of outputs of the pair of the light detector (3), and second sample-hold means (71) for holding and outputting an output level of said differential amplifier means (41) of a second predetermined period.

6. An apparatus according to claim 4, further characterized by
first timing generator means (103) for recognizing signals of the ID area (12) and delivering said first predetermined period (Ss1) to said first sample-hold means (61).

7. An apparatus according to claim 5, further characterized by
second timing generator means (103) for recognizing signals of the ID area (12) and delivering said second predetermined period (Ss2) to said second sample-hold means (71).

8. An apparatus according to claims 6 and 7, characterized in that one timing generator means (103) delivers both said first and second predetermined period (Ss1, Ss2) to said first and second sample-hold means (61, 71), respectively.

9. An apparatus according to any one of claims 1 to 8, characterized by
display means (83) connected to an output terminal of said third detection means (8), whereby an amount of said offset is displayed thereon.

10. An apparatus according to any one of claims 1 to 9, characterized in that said third detection means (8) comprises a differential amplifier means (81).

11. An apparatus according to claim 6,
further characterised by determining said first predetermined period (Ss1) depending on said recognized signals of the ID area (12).

## Patentansprüche

1. Vorrichtung zum optischen Schreiben sowie Lesen einer digitalen Information auf einer gerillten Spur, die koaxial oder spiralförmig auf einer optischen Aufzeichnungsplatte (1) angeordnet ist, wobei jede Spur in eine Vielzahl von Sektoren aufgeteilt ist, von denen jeder einen ID-Bereich (12) und einen Daten-Bereich (11) aufweist, bei welcher ein Lichtpunkt (SP) auf die Spur fokussiert wird, und ein von dieser reflektiertes Licht durch ein Paar von Lichtdetektoren (3) detektiert wird, von dessen Ausgängen ein Datensignal sowie ein Spurverfolgungsfehlersignal (Ste) detektiert werden, und wobei das Spurverfolgungsfehlersignal (Ste) eine Servo-Steuersystem zugeführt wird, um eine Ausrichtung des Lichtpunktes (SP) derart zu steuern, daß er die Mitte der Spur einnimmt, wobei die Vorrichtung umfaßt:
erste Detektionsmittel (6) zum Detektieren der Differenz der Ausgangssignale des Lichtdetektors (3) und zum Ausgeben der genannten Differenz, welche während einer ersten vorherbestimmten Zeitdauer abgetastet worden ist, wobei das Ausgangssignal der genannten ersten Detektionsmittel (6) ein erstes abgetastetes Spurverfolgungsfehlersignal ist, das einen konstanten Ausgangspegel für jeden Sektor hält,
zweite Detektionsmittel (7) zum Ausgeben des Spurverfolgungsfehlersignals, das während einer zweiten vorherbestimmten Zeitdauer abgetastet worden ist, wobei das Ausgangssignal der genannten zweiten Detektionsmittel (7) ein zweites abgetastetes Spurverfolgungsfehlersignal ist, das für jeden Sektor einen konstanten Ausgangspegel hält, und
dritte Detektionsmittel (8) zum Detektieren und Ausgeben einer Differenz der genannten ersten und zweiten abgetasteten Spurverfolgungsfehlersignale,
und weiterhin umfasst,
daß die ersten Detektionsmittel (6) einen Durchschnitt der genannten detektierten Differenz bilden,
daß die genannte erste vorherbestimmte Zeitdauer die Zeitdauer ist, während der der Lichtpunkt (SP) Lochmuster des ID-Bereichs (12) abtastet, und
daß die genannte zweite vorherbestimmte Zeitdauer die Zeitdauer ist, während der der Lichtpunkt (SP) eine freie Zone im genannten Daten-Bereich abtastet, und
daß das genannte Ausgangssignal (Sto) der genannten dritten Detektionsmittel (8) den Betrag einer Nullpunktsabweichung Offset anzeigt, welche eine noch vorhandene Abweichung des Lichtpunkts (SP) von der Mitte der Spur darstellt, so daß der Lichtpunkt (SP) durch das Spurverfolgungsfehlersignal derart servogesteuert wird, daß das Spurenverfolgungsfehlersignal im wesentlichen bei Null gehalten wird.

2. Vorrichtung nach Anspruch 1, weiterhin gekennzeichnet durch Signalzusammensetzungsmittel (9) zum Verknüpfen des genannten Nullpunktsabweichungssignal (Sto), das von den genannten dritten Detektionsmitteln (8) ausgegeben worden ist, mit dem Spurverfolgungsfehlersignal (Ste), wobei das verknüpfte Signal (Ste') für die Servosteuerung des Lichtpunktes (SP) zurückgeführt wird, wodurch eine Nullpunktsabweichungskomponente im Spurverfolgungsfehlersignal reduziert wird.

3. Vorrichtung nach Anspruch 1 oder 2, dadurch gekennzeichnet, daß die genannten ersten Detektionsmittel (6) einen Verstärker für ein niedriges Frequenzband enthalten, um einen Durchschnittspegel der Differenz der Ausgangssignale des Lichtdetektorpaares (3) auszugeben.

4. Vorrichtung nach einem der Ansprüche 1 bis 3, dadurch gekennzeichnet, daß die genannten ersten Detektionsmittel (6) zusammengesetzt sind aus:
einem Differenzverstärker (41) zum Detektieren der Differenz der Ausgangssignale des Lichtdetektorpaares (3) und zum Ausgeben eines Durchschnittswertes der genannten detektierten Differenz, und ersten Abtast-Haltemitteln (61) zum Halten und Ausgeben eines Ausgangspegels des genannten Differenzverstärkers (41) von einer ersten vorherbestimmten Zeitdauer für jeden Sektor.

5. Vorrichtung nach einem der Ansprüche 1 bis 4, dadurch gekennzeichnet, daß die genannten zweiten Detektionsmittel (7) zusammengesetzt sind aus:
einem Differenzverstärker (41) zum Detektieren der Differenz der Ausgangssignale des Lichtdetektorpaares (3) und zweiten Abtast-Haltemitteln (71) zum Halten und Ausgeben eines Ausgangspegels des genannten Differenzverstärkers (41) von einer zweiten vorherbestimmten Zeitdauer.

6. Vorrichtung nach Anspruch 4, weiterhin gekennzeichnet durch eine erste Synchronisierungseinheit (103) zum Erkennen von Signalen des ID-Bereichs (12) und zum Liefern der genannten ersten vorherbestimmten Zeitdauer (Ss1) für die genannten ersten Abtast-Haltemittel (61).

7. Vorrichtung nach Anspruch 5, weiterhin gekennzeichnet durch eine zweite Synchronisierungseinheit (103) zum Erkennen von Signalen des ID-Bereichs (12) und zum Liefern der genannten zweiten vorherbestimmten Zeitdauer (Ss2) an die genannten zweiten Abtast-Haltemittel (71).

8. Vorrichtung nach Anspruch 6 und 7, dadurch gekennzeichnet, daß eine Sychronisierungseinheit (103) sowohl die genannte erste als auch zweite vorherbestimmte Zeitdauer (Ss1, Ss2) jeweils an die genannten ersten und zweiten Abtast-Haltemittel (61, 71) liefert.

9. Vorrichtung nach einem der Ansprüche 1 bis 8, gekennzeichnet durch Anzeigemittel (83), die mit einem Ausgangsanschluß der dritten Detektionsmittel (8) verbunden sind, wodurch ein Betrag der genannten Nullpunktsabweichnung auf diesen angezeigt wird.

10. Vorrichtung nach einem der Ansprüche 1 bis 9, dadurch gekennzeichnet, daß die dritten Detektionsmittel (8) einen Differenzverstärker umfassen.

11. Vorrichtung nach Anspruch 6, weiterhin gekennzeichnet durch die Bestimmung der genannten ersten Zeitdauer (Ss1) in Abhängigkeit von den erkannten Signalen des ID-Bereichs (12).

## Revendications

1. Dispositif pour écrire ainsi que pour lire optiquement une information numérique dans une piste à gorge agencée de façon concentrique ou en spirale sur un disque d'enregistrement optique (1), chaque piste étant divisée en une pluralité de secteurs dont chacun comporte une zone d'identification ID (12) et une zone de données (11), dans lequel un spot lumineux (SP) est focalisé sur la piste et une lumière qui en est réfléchie est détectée par une paire de détecteurs de lumière (3) et à partir des sorties de ces détecteurs, un signal de données ainsi qu'un signal d'erreur de suivi de piste (Ste) sont détectés et le signal d'erreur de suivi de piste (Ste) est appliqué à un système de commande d'asservissement afin de commander un emplacement du spot lumineux (SP) de manière à capturer le centre de la piste, comprenant :
un premier moyen de détection (6) pour détecter une différence de signaux de sortie en provenance du détecteur de lumière (3) et pour émettre en sortie ladite différence détectée échantillonnée sur une première période prédéterminée, un signal de sortie dudit premier moyen de détection (6) étant un premier signal d'erreur de suivi de piste échantillonné, en maintenant un niveau de sortie constant pour chaque secteur ;
un second moyen de détection (7) pour émettre en sortie le signal d'erreur de suivi de piste échantillonné sur une seconde période prédéterminée, un signal de sortie dudit second moyen de détection (7) étant un second signal d'erreur de suivi de piste échantillonné, en maintenant un niveau de sortie constant pour chaque secteur ; et
un troisième moyen de détection (8) pour détecter et émettre en sortie une différence desdits premier et second signaux d'erreur de suivi de piste échantillonnés,
caractérisé en outre en ce que :
ledit premier moyen de détection (6) calcule la moyenne de ladite différence détectée ;
ladite première période prédéterminée est la période pendant laquelle le spot lumineux (SP) balaie des piqûres de la zone ID (12) ;
ladite seconde période prédéterminée est la période pendant laquelle le spot lumineux (SP) balaie une région disponible de ladite zone de données ; et
ladite sortie (Sto) dudit troisième moyen de détection (8) indique une valeur de décalage qui est encore une déviation existante du faisceau lumineux (SP) par rapport au centre de la piste de telle sorte que le spot lumineux (SP) soit commandé de manière asservie par le signal d'erreur de suivi de piste de manière à maintenir le signal d'erreur de suivi de piste essentiellement à zéro.

2. Dispositif selon la revendication 1, caractérisé en outre par un moyen de composition de signal (9) pour composer ledit signal de décalage (Sto) émis en sortie depuis ledit troisième moyen de détection (8) avec le signal d'erreur de suivi de piste (Ste), ledit signal composé (Ste') étant retourné afin de commander de façon asservie le spot lumineux (SP) d'où il résulte qu'une composante de décalage du signal d'erreur de suivi de piste est réduite.

3. Dispositif selon la revendication 1 ou 2, caractérisé en ce que ledit premier moyen de détection (6) inclut un moyen d'amplificateur pour la bande basse fréquence de manière à émettre en sortie un niveau moyen de la différence des sorties de la paire de détecteurs de lumière (3).

4. Dispositif selon l'une quelconque des revendications 1 à 3, caractérisé en ce que ledit premier moyen de détection (6) est constitué par un moyen d'amplificateur différentiel (41) pour détecter la différence des sorties de la paire de détecteurs de lumière (3) et pour émettre en sortie une moyenne de ladite différence détectée, et par un premier moyen échantillonneur/bloqueur (61) pour bloquer et émettre en sortie un niveau de sortie dudit premier moyen d'amplificateur différentiel (41) d'une première période prédéterminée pour chaque secteur.

5. Dispositif selon l'une quelconque des revendications 1 à 4, caractérisé en ce que ledit second moyen de détection (7) est constitué par un moyen d'amplicateur différentiel (41) pour détecter la différence des sorties de la paire de détecteurs de lumière (3), et par un second moyen échantillonneur/bloqueur (71) pour bloquer et émettre en sortie un niveau de sortie dudit moyen d'amplificateur différentiel (41) d'une seconde période prédéterminée.

6. Dispositif selon la revendication 4, caractérisé en outre par un premier moyen générateur de cadencement (103) pour reconnaître des signaux de la zone ID (12) et pour délivrer ladite première période prédéterminée (Ss1) audit premier moyen échantillonneur/bloqueur (61).

7. Dispositif selon la revendication 5, caractérisé en outre par un second moyen générateur de cadencement (103) pour reconnaître des signaux de la zone ID (12) et pour délivrer ladite seconde période prédéterminée (Ss2) audit second moyen échantillonneur/bloqueur (71).

8. Dispositif selon les revendications 6 et 7, caractérisé en ce qu'un moyen générateur de cadencement (103) délivre à la fois lesdites première et seconde périodes prédéterminées (Ss1, Ss2) respectivement auxdits premier et second moyens échantillonneurs-bloqueurs (61, 71).

9. Dispositif selon l'une quelconque des revendications 1 à 8, caractérisé par un moyen d'affichage (83) connecté à une borne de sortie dudit troisième moyen de détection (8) d'où il résulte qu'une valeur dudit décalage est affichée dessus.

10. Dispositif selon l'une quelconque des revendications 1 à 9, caractérisé en ce que ledit troisième moyen de détection (8) comprend un moyen d'amplificateur différentiel (81).

11. Dispositif selon la revendication 6, caractérisé en outre par la détermination de ladite première période prédéterminée (Ss1) en fonction desdits signaux reconnus de la zone ID (12).
